# EUROPÄISCHE PATENTSCHRIFT

(11) **EP 1 368 134 B1**
(45) Veröffentlichungstag und Bekanntmachung des Hinweises auf die Patenterteilung: **21.05.2008**
(21) Anmeldenummer: 02708255.1
(22) Anmeldetag: 03.01.2002
(51) Int. Cl.: B05D 5/00, C09D 201/02, B05D 3/02, B05D 3/06

(54) **BESCHICHTUNGSVERFAHREN UND BESCHICHTUNGSMITTEL**
COATING AGENT
AGENT D'ENDUCTION

(30) Priorität: 04.01.2001 DE 10100170
(43) Veröffentlichungstag der Anmeldung: 10.12.2003
(73) Patentinhaber: BASF SE, 67056 Ludwigshafen (DE)
(72) Erfinder: JAWOREK, Thomas, 67169 Kallstadt (DE); SCHWALM, Reinhold, 67157 Wachenheim (DE); KÖNIGER, Rainer, 68199 Mannheim (DE); BECK, Erich, 68526 Ladenburg (DE); WEBER, Martin, 67487 Maikammer (DE); RAMSTEINER, Falko, 67069 Ludwigshafen (DE); PFAU, Andreas, 67067 Ludwigshafen (DE); SCHROF, Wolfgang, 67271 Neuleiningen (DE)
(74) Vertreter: Thalhammer, Wolfgang
(86) Internationale Anmeldenummer: PCT/EP2002/000019
(87) Internationale Veröffentlichungsnummer: WO 2002/053298

(56) Entgegenhaltungen:
- EP-A- 0 947 254
- DE-A- 10 004 488
- DE-A- 19 829 995
- DE-A- 19 835 194
- DE-A- 19 857 941
- DE-A- 19 920 801
- DE-A- 19 947 521

## Beschreibung

Die vorliegende Erfindung betrifft ein Verfahren zur Herstellung eines beschichteten Substrats durch Auftragen wenigstens eines Beschichtungsmittels auf das Substrat und anschließendes Härten zur Erzielung einer Lackschicht auf dem Substrat, die nach diesem Verfahren erhaltenen beschichteten Substrate sowie ein Beschichtungsmittel.

In der Industrie werden heute zunehmend Formteile auf Kunststoffbasis verwendet, die gegebenenfalls zusammen mit Metallteilen eingesetzt werden und die einer Lackierung bedürfen. Dies gilt insbesondere für Kraftfahrzeugteile, die in zunehmendem Maße aus Kunststoffteilen gefertigt werden, wie beispielsweise Stoßfängerverkleidungen, Spoiler, Schweller, Radhausverkleidungen und seitliche Verkleidungen bzw. Schutzleisten.

Kunststoffe sind im Allgemeinen empfindlich gegenüber Witterungseinflüssen wie UV-Strahlung und Feuchtigkeit und zeigen bei entsprechender Belastung vielerlei Probleme wie Vergilbung, Versprödung oder Rissbildung, wenn nicht entsprechende Vorsorgemaßnahmen getroffen werden. Zur Vermeidung dieser Probleme ist es beispielsweise bekannt, Kunststoffe, die aufgrund ihrer Verwendung als Automobilaußenteile Witterungseinflüssen ausgesetzt sind, mit Klarlacken oder Decklacken zu versehen.

Neben der bereits genannten Witterungsbeständigkeit sollen die eingesetzten Lacke gleichzeitig eine gute Haftung auf den Kunststoffsubstraten aufweisen und zu einem hydrolysebeständigen Verbund (d. h. gute Haftung nach Feuchteeinwirkung) mit guter Chemikalienresistenz und guter Festigkeit bei Raumtemperatur führen, der auch bei niedrigen Temperaturen von -20 bis -30°C ein duktiles Bruchverhalten zeigt. Letzteres ist vor allem dann ein Problem, wenn sehr harte und kratzfeste Decklacke verwendet werden sollen, deren sprödes Verhalten auch das mechanische Verhalten des darunter liegenden Kunststoffsubstrats beeinflusst.

Im Bereich der Kunststofflackierung besteht außerdem noch die Forderung, dass die eingesetzten Beschichtungsmittel bei niedrigen Temperaturen (im Allgemeinen < 100 °C) aushärtbar sind und auch bei Aushärtung bei diesen niedrigen Temperaturen zu Filmen mit den gewünschten Eigenschaften führen. Hierbei kann die Klarlackierung als alleinige Lackschicht verwendet werden oder die oberste Schicht einer mehrschichtigen Decklackierung bilden. Derartige Beschichtungsmittel sind prinzipiell auch als Klarlackierung in der Automobilerst- und -reparaturlackierung, der industriellen Lackierung, inklusive Coil Coating und Container Coating oder der Möbellackierung geeignet.

Als Klar- bzw. Decklackschicht kommen die üblichen und bekannten Einkomponenten (1K)-, Zweikomponenten (2K)-, Mehrkomponenten (3K, 4K)- Pulver- oder Pulverslurry-Klarlacke oder UV-härtbare Klarlacke in Betracht. Einkomponenten(1K)-, Zweikomponenten(2K)- oder Mehrkomponenten(3K, 4K)-Klarlacke werden beispielsweise in der US 5,474,811, US 5,356,669, US 5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 und der WO 92/22615 beschrieben.

Pulverklarlacke sind beispielsweise aus der DE-A-42 22 194 bekannt.

Ein Pulverlack, welcher thermisch und mit energiereicher Strahlung härtbar ist, ist in der EP-A-0 844 286 beschrieben. Er enthält ein ungesättigtes Bindemittel und ein zweites hiermit copolymerisierbares Harz sowie einen Photoinitiator und einen thermischen Initiator und ist somit thermisch und mit energiereicher Strahlung härtbar. Allerdings wird dieser Dual Cure-Pulverlack als pigmentierter Decklack verwendet, welcher an der Oberfläche mit UV-Licht und in den substratnahen Bereichen thermisch gehärtet wird.

Pulverslurry-Lacke sind Pulverlacke in Form wässriger Dispersionen. Derartige Slurries sind beispielsweise in der US 4,268,542, DE-A-195 18 392 und DE-A-196 13 547 beschrieben.

UV-härtbare Klarlacke sind beispielsweise in der EP-A-0 540 884, EP-A-0 568 967 und der US 4,675,234 beschrieben.

Jeder dieser Klarlacke ist noch verbesserungswürdig. So erhält man zwar mit Hilfe dieser Klarlacke in der Regel Mehrschichtlakkierungen, die den optischen Anforderungen genügen. Indes sind einige der kratzfesten Einkomponenten(1K)-Klarlacke nicht genügend witterungsbeständig, wogegen die witterungsbeständigen zweikomponenten(2K)- oder Mehrkomponenten(3K, 4K)-Klarlacke oftmals nicht genügend kratzfest sind. Manche Einkomponenten(lK)-Klarlacke sind zwar kratzfest und witterungsstabil, weisen aber in Kombination mit häufig angewandten Wasserbasislacken Oberflächenstörungen wie Schrumpf (wrinkling) auf.

Pulverklarlacke, Pulverslurry-Klarlacke und UV-härtbare Klarlacke dagegen weisen in der Regel eine nicht völlig befriedigende Zwischenschichthaftung auf, ohne dass die Probleme der Kratzfestigkeit oder der Etchbeständigkeit völlig gelöst wären.

Aus der EP-A-0 568 967 ist ein Verfahren zur Herstellung von Mehrschichtlackierungen bekannt, bei dem eine thermisch härtbare Klarlackschicht nach dem Nass-in-nass-Verfahren auf eine pigmentierte Basislackschicht aufgetragen wird, wonach die beiden Schichten in der Wärme gemeinsam ausgehärtet werden. Auf die ausgehärtete Klarlackschicht wird anschließend mindestens eine weitere Klarlackschicht auf der Basis von mit aktinischer Strahlung härtbaren Beschichtungsstoffen aufgetragen und mit aktinischer Strahlung oder mit aktinischer Strahlung und thermisch ausgehärtet. Dieses Verfahren liefert Klarlacküberzüge von hoher Chemikalienfestigkeit und optischer Qualität. Indes ist die Kratzfestigkeit nicht befriedigend.

Außerdem beschreibt die EP-A-0 568 967 ein Verfahren, bei dem ein mit aktinischer Strahlung härtbarer Beschichtungsstoff auf die pigmentierte Basislackschicht aufgetragen und ausgehärtet wird. Anschließend wird eine weitere Schicht desselben Beschichtungsstoffs appliziert und mit aktinischer Strahlung gehärtet. Es resultiert zwar eine hochglänzende Oberfläche ohne wahrnehmbare Struktur, indes vergilbt der betreffende Klarlacküberzug. Auch die Kratzfestigkeit ist verbesserungswürdig.

Durch Hydrolyse und Kondensation von Silanverbindungen werden sogenannte Sol-Gel-Klarlacke auf Basis von siloxanhaltigen Lackformulierungen erhalten. Solche Lacke, die als Überzugsmittel für Beschichtungen von Kunststoffen verwendet werden, sind beispielsweise in der DE-A-43 03 570, DE-A-34 07 087, DE-A-40 11 045, DE-A-40 25 215, DE-A-38 28 098, DE-A-40 20 316 und der DE-A-41 22 743 beschrieben. Derartige Sol-Gel-Klarlacke verleihen den Oberflächen von Kunststoff-Substraten wie Brillengläser oder Motorradhelm-Visiere eine sehr gute Kratzfestigkeit. Diese Kratzfestigkeit wird von den bekannten OEM (Original Equipment Manufacturing)-Klarlacken, die üblicherweise bei der Erstlackierung von Fahrzeugen verwendet werden, nicht erreicht.

Es ist wünschenswert, diese verbesserte Kratzfestigkeit auch auf die bei der Lackierung von Automobilen verwendeten Klarlackschichten zu übertragen. Vor allem sollen die besonders stark beanspruchten Teile der Automobilkarosserien wie Motorhaube, Stoßfänger, Schweller oder Türen im Bereich der Türgriffe besser geschützt werden.

Der Ersatz der üblicherweise in der Automobillackierung eingesetzten OEM-Klarlacke oder OEM-Pulverslurry-Klarlacke durch Sol-Gel-Klarlacke ist nicht ohne Weiteres möglich, weil letztere z. B. zu spröde sind oder weil bei dem Versuch, sie an die OEM-Anforderungen anzupassen, häufig nur schlechte optische Eigenschaften (Appearance) erzielt werden. Des Weiteren können Sol-Gel-Klarlacke nicht in Dicken > 8 bis 10 µm appliziert werden. Außerdem können Bestandteile der Sol-Gel-Klarlacke bei ihrer Trocknung und/oder Härtung wegschlagen, d. h. sie werden vom Substrat absorbiert, wodurch die Härte der betreffenden Klarlackschichten verloren geht. Außerdem sind die Sol-Gel-Klarlacke für diese Anwendungsbereiche zu teuer.

Der ökonomisch günstigere Einsatz der Sol-Gel-Klarlacke als zusätzliche Überzugsschicht über die bisher verwendeten Klarlacke führt wiederum zu Haftungsproblemen innerhalb der mehrschichtigen Klarlackierung zwischen der Klarlackschicht und der Sol-Gel-Schicht. Diese äußern sich insbesondere nach Steinschlag und bei Belastung durch Schwitzwasser. Diese Probleme werden in manchen Fällen noch dadurch verstärkt, dass auch die Haftung zwischen der Klarlackschicht und dem Substrat durch den Sol-Gel-Überzug in Mitleidenschaft gezogen wird.

Die EP-A-0947254 beschreibt ein Verfahren zur Herstellung einer Beschichtung, die einen geringen Glanz aufweist, wobei eine UV-härtbare Pulverbeschichtung eingesetzt wird. Die UV-härtbare Pulverbeschichtungs-Zusammensetzung besteht im Wesentlichen aus i) einem ungesättigten Harz, ii) einem ungesättigten copolymerisierbaren vernetzenden Harz und iii) einem Photoinitiator, wobei wenigstens 15 Gew.-% der Harzkomponenten i) und ii) in Form kristalliner Harze eingesetzt werden.

Die DE-A-19835194 beschreibt eine Folie, umfassend wenigstens eine Trägerschicht und wenigstens eine darauf aufgebrachte Lackschicht, wobei wenigstens eine Schicht auf Basis eines strahlenhärtbaren Pulverlacks oder einer strahlenhärtbaren Pulverlackdispersion vorhanden ist. Diese Pulverlacke können unter anderem farbig pigmentierte Bindemittel enthalten.

Die DE-A-19857941 beschreibt ein Verfahren zur Mehrschichtlackierung durch Auftrag von Füller- und/oder weiterer Überzugsmittelschichten und anschließend von einer Decklackschicht aus einem Basislack/Klarlackaufbau oder aus einem pigmentieren Einschichtdecklack auf ein Substrat, wobei mindestens eine der Schichten aus einem mittels energiereicher. Strahlung zumindest teilweise härtbarem Beschichtungsmittel erstellt wird, bei dem nach Applikation des mittels energiereicher Strahlung zumindest teilweise härtbaren Beschichtungsmittels zunächst eine Bestrahlung mit IR-Strahlung und anschließend eine Bestrahlung mit energiereicher Strahlung erfolgt.

Die DE-A-19947521 beschreibt ein festes Stoffgemisch, enthaltend A) mindestens ein festes (Meth)Acrylatcopolymerisat enthaltend mit aktinischer Strahlung aktivierbare Bindungen und B) mindestens eine feste Verbindung, die an eine Grundstruktur gebunden mehr als eine Gruppe mit aktinischer Strahlung aktivierbare Bindungen pro Molekül enthält.

Die DE-A-10004488 beschreibt ein Verfahren zur Herstellung von Beschichtungen, Klebschichten oder Dichtungen für grundierte oder ungrundierte Substrate, bei dem man 1.) mindestens einen thermisch und/oder mit aktinischer Strahlung härtbaren Beschichtungsstoff, Klebstoff oder Dichtmasse in Form einer Pulveraufschlämmung auf und/oder in ein grundiertes oder ungrundiertes Substrat appliziert, 2.) die resultierende Schicht trocknet, 3.) die resultierende feste Schicht aus Schritt 2) durch Erhitzen aufschmilzt und 4.) die in Schritt 3) resultierende geschmolzene Schicht im geschmolzenen Zustand, beim Erstarren und/oder nach dem Erstarren mit naher Infrarotstrahlung (NIR-Strahlung) härtet.

Die DE-A-19920801 beschreibt hoch kratzfeste, mehrschichtige Lakkierungen zu deren Herstellung man 1.) mindestens eine Klarlackschicht I aus einem mit aktinischer Strahlung und thermisch härtbaren Beschichtungsstoff I auf die Oberfläche des Substrats oder nass-in-nass auf die Oberfläche einer Basislackschicht III appliziert und partiell aushärtet und 2.) eine weitere Klarlackschicht II aus einem mit aktinischer Strahlung sowie gegebenenfalls thermisch härtbaren Beschichtungsstoff II, enthaltend Nanopartikel, auf die Oberfläche der Klarlackschicht(en) I appliziert, wonach man 3.) die Klarlackschichten I und II sowie gegebenenfalls die Basislackschicht III gemeinsam mit aktinischer Strahlung und thermisch aushärtet. Alternativ können die Klarlackschichten I und gegebenenfalls die Basisklackschichten III vollständig mit aktinischer Strahlung und thermisch ausgehärtet werden, danach die äußere Oberfläche der Klarlackschicht I mit der Klarlackschicht II beschichtet und diese ebenfalls ausgehärtet werden.

Die DE-A-19829995 beschreibt ein Verfahren zur Verminderung der Anfangsvergilbung von strahlengehärteten Beschichtungen, wobei die strahlenhärtbare Masse auf ein Substrat aufgetragen, durch Bestrahlung mit UV-Licht gehärtet und die erhaltenen, strahlengehärteten Beschichtungen anschließend auf 50 bis 140°C erwärmt werden.

Der vorliegenden Erfindung liegt die Aufgabe zugrunde, ein Verfahren zur Herstellung von beschichteten Substraten zur Verfügung zu stellen, die in Form einer ein- oder mehrschichtigen Lackschicht die Nachteile des Stands der Technik vermeidet. So sollen die Beschichtungen vorzugsweise ein Eigenschaftsprofil aufweisen, das möglichst viele der folgenden Eigenschaften vereinigt: die Beschichtungen sind in einfacher Weise herstellbar, hochkratzfest, witterungsstabil, vergilbungsfrei, hart, flexibel und/oder von Oberflächenstörungen frei. Vorzugsweise sollen sie auf einer Vielzahl von unterschiedlichen Substraten sowie innerhalb der Lackierung eine hohe Haftung aufweisen. Speziell sollen sie die mechanischen Eigenschaften des Substrats im Wesentlichen nicht negativ beeinflussen und sich in der für einen hervorragenden optischen Gesamteindruck notwendigen hohen Schichtdicke herstellen lassen.

Überraschenderweise wurde nun gefunden, dass diese Aufgabe durch ein Verfahren zur Herstellung eines beschichteten Substrats gelöst wird, bei dem man auf das Substrat ein Beschichtungsmittel aufträgt und anschließend härtet und man in dem Beschichtungsmittel eine Unstetigkeit (einen Gradienten) hinsichtlich wenigstens einer chemischen und/oder physikalischen Eigenschaft induziert und fixiert.

Gegenstand der Erfindung ist ein Verfahren zur Herstellung eines beschichteten Substrats durch Auftragen wenigstens eines Beschichtungsmittels auf das Substrat und anschließendes Härten zur Erzielung einer Lackschicht auf dem Substrat, wobei man in dem Beschichtungsmittel im Wesentlichen senkrecht zur Substratoberfläche einen Gradienten wenigstens einer chemischen und/oder physikalischen Eigenschaft induziert und fixiert, und wobei das Beschichtungsmittel
A) wenigstens eine Verbindung mit mindestens zwei funktionellen Gruppen, die zur Reaktion mit einer komplementären funktionellen Gruppe einer Verbindung der Komponente B) unter Bedingungen der thermischen Härtung befähigt sind,
B) wenigstens eine Verbindung mit mindestens zwei funktionellen Gruppen, die zur Reaktion mit einer komplementären funktionellen Gruppe einer Verbindung der Komponente A) unter Bedingungen der thermischen Härtung befähigt sind,
C) gegebenenfalls wenigstens eine Verbindung mit zwei in Gegenwart eines Photoinitiators mit UV-Strahlung härtbaren C=C-Doppelbindungen,
D) wenigstens einen Photoinitiator,
E) gegebenenfalls wenigstens eine Verbindung, die befähigt ist, thermisch Radikale zu bilden,
F) gegebenenfalls wenigstens einen von den Verbindungen der Komponenten A) bis C) verschiedenen Reaktivverdünner, der zur Vernetzung unter Bedingungen der thermischen Härtung befähigt ist,
G) gegebenenfalls wenigstens einen von den Verbindungen der Komponenten A) bis C) und F) verschiedenen Reaktivverdünner, der zur Vernetzung mit UV-Strahlung befähigt ist,
H) gegebenenfalls Nanopartikel,
I) mindestens 5 Gew.-%, bezogen auf die Gesamtmenge der Komponenten A) bis K),wenigstens eines Lackadditivs, ausgewählt unter UV-Absorbern und farbigen Pigmenten, und Mischungen davon, das zur Induktion des Gradienten während des Härtens befähigt ist, und
K) gegebenenfalls weitere von Verbindungen der Komponente I) verschiedene, übliche Lackadditive,
umfasst, mit der Maßgabe, dass wenigstens eine Verbindung der Komponenten A) und/oder B) zusätzlich wenigstens eine mit UV-Strahlung härtbare C=C-Doppelbindung aufweist und wobei als komplementäre funktionelle Gruppen Hydroxylgruppen und Isocyanatgruppen eingesetzt werden.

Ein weiterer Gegenstand der Erfindung ist ein beschichtetes Substrat, das durch das zuvor beschriebene Verfahren erhältlich ist.

Ein weiterer Gegenstand der Erfindung ist ein Beschichtungsmittel, wie zuvor definiert.

Vorzugsweise ist die den Gradienten aufweisende Eigenschaft ausgewählt unter der Vernetzungsdichte, Netzbogenlänge, Netzspannung, Mikrohärte, dem freien Volumen und Kombinationen davon. Der Nachweis des Gradienten (der Unstetigkeit) kann z. B. mit Hilfe der konfokalen Raman-Mikroskopie erfolgen, wie dies von W. Schroof, E. Beck, R. Königer, W. Reich und R. Schwalm in "Progress in Organic Coatings", 35(1999), S. 197-204 beschrieben wird.

Der Nachweis des Eigenschaftsgradienten gelingt in vorteilhafter Weise z. B. mit Hilfe der Rasterkraftmikroskopie. Nach Herstellung von Film-Schnitten der erfindungsgemäßen beschichteten Substrate können die Schnittflächen mit Hilfe der von F.N. Jones et al. in Progress in Organic Coatings 34 (1998), S. 119-129: Studies of microhardness and mar resistance using a scanning probe microscope, beschriebenen Methode zur Bestimmung der Mikrohärte untersucht werden.

Der Nachweis des Gradienten kann auch vorteilhaft mittels 2-Photonen Mikroskopie zur Bestimmung des freien Volumens des Polymerfilms erfolgen. Zur Bestimmung des freien Volumens in einer gehärteten Lackschicht kann dieser vor dem Auftragen ein Fluoreszenzfarbstoff zugesetzt werden. Dabei ist der Fluoreszenzfarbstoff so auszuwählen, dass er, sofern die Härtung mittels UV-Bestrahlung erfolg, diese nicht beeinträchtigt. Nach der Härtung des Films zeigen die eingesetzten Fluoreszenzfarbstoffe eine Wellenverschiebung, die vom freien Volumen in der Matrix (dem gehärteten Beschichtungsmittel) abhängt. Die 2-Photonen Mikroskopie erlaubt mit hoher lateraler und tiefenabhängiger Auflösung die ortsabhängige Bestimmung des freien Volumens. Diese Methode lehnt sich an die von R. Propielarz, D.C. Neckers, Proceedings, RadTech 1996, North America, Intern. UV/EB Processing Conference, 1996, S. 271-277 beschriebene an, nach der das freie Volumen im Durchlicht, d. h. integral über den gesamten Film, bestimmt wird.

Nach einer ersten bevorzugten Ausführungsform des erfindungsgemäßen Verfahrens erfolgt die Induktion des Gradienten während des Auftragens des Beschichtungsmittels auf das Substrat und die Fixierung während des Härtens. Dazu kann man das Beschichtungsmittel z. B. nach einem Gradienten-Gießverfahren mit zeitlich variierter Menge an Verdünnungsmittel auf das Substrat auftragen.

Nach einer weiteren bevorzugten Ausführungsform des erfindungsgemäßen Verfahrens erfolgt die Induktion des Gradienten nach dem Auftragens des Beschichtungsmittels auf das Substrat und die Fixierung während des Härtens. Dazu kann das Beschichtungsmittel Komponenten enthalten oder in einer Beschichtungsweise aufgetragen werden, dass nach dem Auftrag durch Diffusionseffekte der Gradient induziert wird.

Nach einer weiteren bevorzugten Ausführungsform erfolgt die Induktion des Gradienten und dessen Fixierung während des Härtens.

Vorzugsweise wird in dem erfindungsgemäßen Verfahren ein Beschichtungsmittel eingesetzt, das über mindestens zwei verschiedene Mechanismen gehärtet werden kann.

Besonders bevorzugt sind Beschichtungsmittel, die mit aktinischer Strahlung, wie UV-Strahlung und Elektronenstrahlen, und thermisch gehärtet werden können.

Unter Härten wird im Rahmen dieser Anmeldung verstanden, dass das Beschichtungsmittel aus einem Zustand, der für die Applikation und/oder den Verlauf (Auftragen) notwendig ist, in einen festen Zustand übergeht, der Lackeigenschaften aufweist. Dabei ist es nicht notwendig, dass die Härtung des Beschichtungsmittels nach einem Härtungsmechanismus bereits ausreicht, um das lacktypische Eigenschaftsprofil wie Härte, Kratzfestigkeit und/oder Chemikalienbeständigkeit zu erreichen.

Nach einer bevorzugten Ausführungsform wird durch Kombination von mindestens zwei Härtungsmethoden ein Lack erhalten, der das endgültige gewünschte Eigenschaftsprofil aufweist. Vorzugsweise wird dann eine der beiden Härtungsmethoden so gesteuert, dass die resultierende Lackschicht den Gradienten hinsichtlich einer oder mehrerer chemischer und/oder physikalischen Eigenschaften zeigt. Der erfindungsgemäß induzierte Gradient bewirkt, dass der Lack die an eine Lackoberfläche geforderte Beständigkeit gegenüber mechanischen und Umwelteinflüssen hat. Die induzierte Unstetigkeit hinsichtlich einer oder mehrerer chemischer und/oder physikalischer Eigenschaften ermöglicht in der Regel auch eine gute Haftung der Lackschicht zum Substrat. Des Weiteren ermöglicht der induzierte Gradient in einer oder mehreren Schichten eines Mehrschichtlacks, Zwischenschichten zu erzielen, und die Beeinflussung der mechanischen Eigenschaften des Kunststoff substrats durch einen harten und spröden Decklack so zu reduzieren, dass die anwendungstechnischen mechanischen Eigenschaften des lackierten Bauteils erhalten bleiben.

Geeignete Härtungsmethoden sind z. B. die Trocknung bzw. das Eindampfen von Lösungen und Dispersionen des Beschichtungsmittels, die thermische Härtung, die oxidative Härtung oder die Härtung durch energiereiche (aktinische) Strahlung, insbesondere UV-Strahlung, sowie Kombinationen davon. Beim Härten über zwei verschiedene Mechanismen wird als erste Härtung insbesondere die "thermische Härtung" bevorzugt. Die zweite Härtung kann durch eine der beschriebenen Härtungsmethoden, z. B. durch Variation der Einwirkungszeit oder durch höhere Temperaturen oder höhere Strahlungsintensitäten bzw. bei anderen Wellenlängenbereichen der Strahlung erfolgen. Als zweite Härtung wird die Härtung durch Einwirkung von energiereicher Strahlung, insbesondere die Härtung durch UV-Strahlung, bevorzugt.

Im Rahmen der vorliegenden Erfindung umfasst der Begriff thermische Härtung sowohl die Fremdvernetzung als auch die Selbstvernetzung. Die Form der thermischen Härtung einer Lackschicht aus einem Beschichtungsmittel, das ein separat vorliegendes Vernetzungsmittel umfasst, wird dabei als Fremdvernetzung bezeichnet. Enthält das Beschichtungsmittel hingegen die die Vernetzung bewirkenden Komponenten bereits in eingebauter Form, so wird dies als Selbstvernetzung bezeichnet. Erfindungsgemäß ist die Fremdvernetzung von Vorteil.

Im Rahmen der vorliegenden Erfindung wird unter Härtung durch UV-Strahlung bevorzugt eine durch radikalbildende oder kationische Photoinitiatoren initiierte Härtung verstanden.

Erfindungsgemäß wird in dem erfindungsgemäßen Verfahren ein Beschichtungsmittel, wie in Anspruch 1 definiert, eingesetzt, das
A) wenigstens eine Verbindung mit mindestens zwei funktionellen Gruppen, die zur Reaktion mit einer komplementären funktionellen Gruppe einer Verbindung der Komponente B) unter Bedingungen der thermischen Härtung befähigt sind,
B) wenigstens eine Verbindung mit mindestens zwei funktionellen Gruppen, die zur Reaktion mit einer komplementären funktionellen Gruppe einer Verbindung der Komponente A) unter Bedingungen der thermischen Härtung befähigt sind,
C) gegebenenfalls wenigstens eine Verbindung mit zwei in Gegenwart eines Photoinitiators mit UV-Strahlung härtbaren C=C-Doppelbindungen,
D) wenigstens einen Photoinitiator,
E) gegebenenfalls wenigstens eine Verbindung, die befähigt ist, thermisch Radikale zu bilden,
F) gegebenenfalls wenigstens einen von den Verbindungen der Komponenten A) bis C) verschiedenen Reaktivverdünner, der zur Vernetzung unter Bedingungen der thermischen Härtung befähigt ist,
G) gegebenenfalls wenigstens einen von den Verbindungen der Komponenten A) bis C) und F) verschiedenen Reaktivverdünner, der zur Vernetzung mit UV-Strahlung befähigt ist,
H) gegebenenfalls Nanopartikel,
I) wenigstens ein Lackadditiv, das zur Induktion des Gradienten während des Härtens befähigt ist, und
K) gegebenenfalls weitere von Verbindungen der Komponente I) verschiedene, übliche Lackadditive,

Als "komplementäre funktionelle Gruppen" wird im Rahmen der vorliegenden Erfindung ein Paar von funktionellen Gruppen verstanden, die unter den Bedingungen der thermischen Härtung miteinander reagieren können. Bevorzugt reagieren die komplementären funktionellen Gruppen in einer Kondensations- oder Additionsreaktion miteinander. "Komplementäre Verbindungen" sind Paare von Verbindungen, die zueinander komplementäre funktionelle Gruppen aufweisen. Dabei ist es in der Regel unkritisch, welche funktionelle Gruppe des Paares die Verbindung A), und welche die Verbindung B) trägt.

Vorzugsweise erfolgt die Auswahl der komplementären funktionellen Gruppen a und b so, dass sie im Wesentlichen keine durch aktinische Strahlung initiierten Reaktionen eingehen und/oder die nachfolgend beschriebene Härtung mit aktinischer Strahlung nicht stören oder inhibieren. Vorzugsweise erfolgt die Auswahl der komplementären funktionellen Gruppen a und b weiterhin nach der Temperatur, bei welcher die thermische Härtung erfolgen soll. Hierbei kann es, insbesondere im Hinblick auf thermisch sensible Substrate wie Kunststoffe, von Vorteil sein, eine Temperatur zu wählen, welche 100°C, insbesondere 80°C nicht überschreitet. Im Hinblick auf diese Rahmenbedingungen werden erfindungsgemäß Hydroxylgruppen (OH) und Isocyanatgruppen (NCO) als komplementäre funktionelle Gruppen a und b eingesetzt.

Die Verbindungen der Komponenten A und/oder B enthalten darüber hinaus mindestens eine weitere funktionelle Gruppe c, die zur Vernetzung mit aktinischer Strahlung geeignet ist. Es werden ausschließlich olefinisch ungesättigte Doppelbindungen als funktionelle Gruppen c verwendet. Beispiele geeigneter funktioneller Gruppen c sind olefinisch ungesättigte Doppelbindungen, wie sie in Vinyl-, Allyl-, Cinnamoyl-, Methacryl-, oder Acrylgruppen, insbesondere Methacryl- oder Acrylgruppen, vorliegen.

Zusätzlich zu den Komponenten A und B kann das Beschichtungsmittel mindestens eine weitere Komponente C enthalten, die mindestens zwei funktionelle Gruppen c, welche der Vernetzung mit aktinischer Strahlung zugänglich sind, aufweist.

Bei den Komponenten A, B und C handelt es sich im Rahmen der vorliegenden Erfindung vorzugsweise um im Wesentlichen oligomere Verbindungen, welche im Allgemeinen im Mittel 2 bis 15 sich wiederholende Grundstrukturen oder Monomereinheiten aufweisen. Unter polymeren Verbindungen wird vorliegend eine Verbindung verstanden, welche im Allgemeinen im Mittel mindestens 16 sich wiederholende Grundstrukturen oder Monomereinheiten aufweist. Verbindungen dieser Art werden auch als Bindemittel oder Harz bezeichnet.

Im Rahmen der vorliegenden Erfindung wird unter einer niedermolekularen Verbindung eine Verbindung verstanden, welche sich im Wesentlichen nur von einer Grundstruktur oder einer Monomereinheit ableitet. Verbindungen dieser Art werden von der Fachwelt im Allgemeinen auch als Reaktivverdünner bezeichnet (Komponenten F) und G)).

Bei der Komponente A handelt es sich vorzugsweise um Harze. Beispiele geeigneter Oligomer- und/oder Polymerklassen sind, α-funktionelle Acrylate, Methacrylate, Polyester oder Polyether. Besonders bevorzugt sind die entsprechenden hydroxyfunktionellen Oligomere bzw. Polymere.

Komponente A kann auch wenigstens eine oligomere oder polymere Verbindung sein, welche gegebenenfalls mindestens eine, vorzugsweise mindestens zwei und insbesondere mindestens drei Hydroxylgruppe(n) bzw. andere der zuvor genannten a-Gruppen und mindestens zwei und insbesondere drei (Meth)Acrylgruppen bzw. andere c-Gruppen enthält.

Vorzugsweise wird die Komponente A in einer Menge von 5 bis 90 Gew.-%, besonders bevorzugt 10 bis 80 Gew.-% und insbesondere 15 bis 70 Gew.-%, jeweils bezogen auf die Gesamtmenge des Beschichtungsmittels eingesetzt.

Des Weiteren enthält das Beschichtungsmittel in der Regel eine Komponente B mit mindestens einer, vorzugsweise mindestens zwei und insbesondere mindestens drei funktionellen Gruppen b, welche der thermischen Härtung in Kombination mit der funktionellen Gruppe a der Komponente A zugänglich sind. Erfindungsgemäß sind Isocyanatgruppen die funktionellen gruppen b. Besondere Vorteile resultieren, wenn die Harze E einen Gehalt von Isocyanatgruppen b von 7 bis 20 Gew.-%, besonders bevorzugt bis 18 Gew.-% und insbesondere 9 bis 17 Gew.-% jeweils bezogen auf das Harz B, aufweisen. Beispiele geeigneter Harze B der vorstehend beschriebenen Art werden beispielsweise in der US 5,234,970, EP-A-0 549 116 oder EP-A-0 618 244 beschrieben.

Die Isocyanatgruppe kann dabei frei oder in blockierter Form vorliegen. Beispiele geeigneter Di- und/oder Polyisocyanate für die Herstellung des Beschichtungsmittels B bzw. der Herstellung der blockierten Derivate sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül eingesetzt. Sie weisen vorzugsweise Viskositäten von 100 bis 10000, vorzugsweise 100 bis 5000 und insbesondere 100 bis 2000 mPas (bei 23 °C) auf. Gegebenenfalls können den Polyisocyanaten noch geringe Mengen organische Lösemittel, bevorzugt 1 bis 25 Gew.-%, bezogen auf reines Polyisocyanat, zugegeben werden, um so die Einarbeitbarkeit des Isocyanats zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate sind in "Methoden der organischen Chemie", Houben-Weyl, Band 14/2, 4. Auflage, Georg Thieme Verlag, Stuttgart 1963, S. 61-70, und in W. Siefken, Liebigs Annalen der Chemie, Band 562, S. 75-136, beschrieben. Geeignet sind auch isocyanatgruppenhaltige Polyurethanpräpolymere, die durch Reaktion von Polyolen mit einem Überschuss an Polyisocyanaten hergestellt werden können.

Weitere Beispiele geeigneter Polyisocyanate sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z. B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyloctan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Besonders bevorzugt werden Gemische aus Uretdion- und/oder Isocyanuratgruppen und/oder Allophanatgruppen aufweisenden Polyisocyanaten auf Basis von Hexamethylendiisocyanat eingesetzt, wie sie durch katalytische Oligomerisierung von Hexamethylendiisocyanat unter Verwendung von geeigneten Katalysatoren entstehen. Der Polyisocyanatbestandteil kann im Übrigen auch aus beliebigen Gemischen der beispielhaft genannten freien Polyisocyanate bestehen.

Ganz besonders bevorzugt werden Gemische aus Allophanatgruppen aufweisenden Polyisocyanaten auf Basis von Hexamethylendiisocyante, wie sie durch katalytische Oligomerisierung von Hexamethylendiisocyanat mit geeigneten Katalysatoren entstehen, eingesetzt, die zusätzlich eine funktionelle Gruppe c tragen, die über aktinische Strahlung härtbar ist.

Beispiele für geeignete Blockierungsmittel sind die aus der US 4,444,954 bekannten. Dazu zählen Blockierungsmittel wie:
i) Phenole wie Phenol, Kresol, Xylenol, Nitrophenol, Chlorophenol, Ethylphenol, t-Butylphenol, Hydroxybenzoesäure, Ester dieser Säure oder 2,5-di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie
xvii) Gemische dieser Blockierungsmittel, insbesondere Dimethylpyrazol und Triazole, Malonester und Acetessigsäureester oder Dimethylpyrazol und Succinimid.

Als Komponente B können auch Tris(alkoxycarbonylamino)triazine der allgemeinen Formel 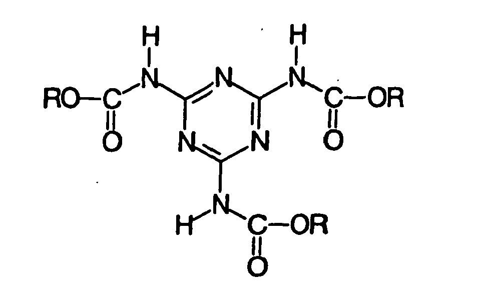 eingesetzt werden, worin die Reste R gleich oder verschieden sein kann und vorzugsweise für Alkyl mit 1 bis 8 C-Atomen, wie Methyl, Ethyl, n-Propyl, Isopropyl, n-Butyl, tert.-Butyl, Pentyl, Hexyl, Heptyl und Octyl stehen.

Beispiele geeigneter Tris(alkoxycarbonylamino)triazine werden in der US 4,939,213, US 5,084,541 oder der EP-A-0 624 577 beschrieben. Insbesondere werden die Tris(methoxy)-, Tris(butoxy)- und/oder Tris(2-ethylhexoxycarbonylamino)triazine verwendet. Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Als Komponente B sind insbesondere Aminoplastharze, beispielsweise Melaminharze, geeignet. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in der US 4,710,542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, S. 193-207, beschrieben.

Weiterhin ist es für das erfindungsgemäße Beschichtungsmittel von Vorteil, wenn die komplementären funktionellen Gruppen a und b, die Hydroxylgruppen und die Isocyanatgruppen, letztere auch in verkappter Form, in einem molaren Verhältnis von a:b (z. B. OH:NCO) von 0,5:1 bis 2:1, vorzugsweise 0,8:1 bis 1,5:1, insbesondere 0,8:1 bis 1,2:1 und ganz besonders bevorzugt 0,8:1 bis 1,0:1 vorliegen.

Die als Komponente C eingesetzten Polymere bzw. Oligomere weisen üblicherweise ein zahlenmittleres Molekulargewicht von 500 bis 50000, bevorzugt von 1000 bis 5000, auf. Liegen, wie im besonders bevorzugten Fall vinylische Doppelbindungen vor, weist das Beschichtungsmittel ein Doppelbindungsäquivalentgewicht von 400 bis 2000, besonders bevorzugt von 500 bis 900, auf. Außerdem weisen sie bei 23°C bevorzugt eine Viskosität von 250 bis 11000 mPas auf. Vorzugsweise sind sie in einer Menge von 5 bis 90 Gew.-%, besonders bevorzugt 10 bis 80 Gew.-% und insbesondere 15 bis 70 Gew.-%, jeweils bezogen auf das Gesamtgewicht des Beschichtungsmittels, enthalten.

Beispiele geeigneter Bindemittel oder Harze C sind aus den Oligomer- und/oder Polymerklassen der mit (Meth)acrylgruppen funktionalisierten (Meth)acrylcopolymeren, Polyetheracrylaten, Polyesteracrylaten, ethylenisch ungesättigten Polyestern, Epoxyacrylaten, Urethanacrylaten, Aminoalkylacrylaten, Melaminacrylaten, Silikonacrylaten und Phosphazenacrylaten und den entsprechenden Methacrylaten. Bevorzugt werden Bindemittel C eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Urethan(meth)acrylate C werden erhalten durch Umsetzung eines Di- oder Polyisocyanats mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat oder Hydroxyalkylester anderer ethylenisch ungesättigter Carbonsäuren.

Die Mengen an Kettenverlängerungsmittel, Di- bzw. Polyisocyanat und Hydroxyalkylester werden dabei bevorzugt so gewählt, dass
1.) das Äquivalenzverhältnis der NCO-Gruppen zu den reaktiven Gruppen des Kettenverlängerungsmittels (Hydroxyl-, Amino-bzw. Mercaptylgruppen) im Bereich von 3:1 bis 1:2, bevorzugt bei 2:1, liegt und
2.) die OH-Gruppen der Hydroxialkylester der ethylenisch ungesättigten Carbonsäuren in stöchiometrischer Menge in Bezug auf die noch freien Isocyanatgruppen des Präpolymeren aus Isocyanat und Kettenverlängerungsmittel vorliegen.

Geeignet sind auch Urethan(meth)acrylate, die erhältlich sind, indem man zunächst einen Teil der Isocyanatgruppen eines Di- oder Polyisocyanats mit mindestens einem Hydroxyalkylester umsetzt und die restlichen Isocyanatgruppen anschließend mit einem Kettenverlängerungsmittel umsetzt. Auch in diesem Fall werden die Mengen an Kettenverlängerungsmittel, Isocyanat und Hydroxyalkylester so gewählt, dass das Äquivalenzverhältnis der NCO-Gruppen zu den reaktiven Gruppen des Kettenverlängerungsmittels zwischen 3:1 und 1:2, bevorzugt bei 2:1 liegt und das Äquivalenzverhältnis der restlichen NCO-Gruppen zu den OH-Gruppen des Hydroxyalkylesters 1:1 beträgt. Selbstverständlich sind auch sämtliche Zwischenformen dieser beiden Verfahren möglich. Beispielsweise kann ein Teil der Isocyanatgruppen eines Diisocyanats zunächst mit einem Diol umgesetzt werden, anschließend kann ein weiterer Teil der Isocyanatgruppen mit dem Hydroxyalkylester und im Anschluss hieran können die restlichen Isocyanatgruppen mit einem Diamin umgesetzt werden.

Diese verschiedenen Herstellverfahren der Urethan(meth)acrylate sind bekannt (vgl. z. B. EP-A-204 161).

Eine Flexibilisierung der Urethan(meth)acrylate ist beispielsweise dadurch möglich, dass entsprechende Isocyanat-funktionelle Präpolymere bzw. Oligomere mit längerkettigen, aliphatischen Diolen und/oder Diaminen, insbesondere aliphatischen Diolen und/oder Diaminen mit mindestens 6 C-Atomen umgesetzt werden. Diese Flexibilisierungsreaktion kann dabei vor oder nach der Addition von Acryl- bzw. Methacrylsäure an die Oligomere bzw. Präpolymere durchgeführt werden.

Als Beispiele für geeignete Urethan(meth)acrylate C seien auch die folgenden, im Handel erhältlichen polyfunktionellen aliphatischen Urethanacrylate genannt:
- Crodamer® UVU 300 der Firma Croda Resins Ltd., Kent, Großbritanniens;
- Genomer® 4302,4235, 4297 oder 4316 der Firma Rahn Chemie, Schweiz;
- Ebecryl® 284, 294, IRR351, 5129 oder 1290 der Firma UCB, Drogenbos, Belgien;
- Roskydal® LS 2989 oder LS 2545 oder V94-504 der Firma Bayer AG, Deutschland;
- Viaktin® VTE 6160 der Firma Vianova, Österreich; oder
- Laromer® 8861 oder Laromer LR 8987 der Firma BASF AG
sowie davon abgewandelte Versuchsprodukte.

Ein Beispiel für ein geeignetes Polyphosphazen(meth)acrylat C ist das Phosphazendimethacrylat der Firma Idemitsu, Japan.

Das erfindungsgemäß zu verwendende Beschichtungsmittel kann mindestens einen Photoinitiator D enthalten, wenn der Beschichtungsstoff mit UV-Strahlung vernetzt werden soll. Sofern sie mitverwendet werden, sind sie in dem Beschichtungsstoff bevorzugt in Anteilen von 0,1 bis 10 Gew.-%, vorzugsweise 1 bis 8 Gew.-% und insbesondere 2 bis 6 Gew.-% jeweils bezogen auf die Gesamtmenge des Beschichtungsstoffs, enthalten.

Beispiele geeigneter Photoinitiatoren sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, S. 444-446, verwiesen), insbesondere Benzophenone, Benzoine oder Benzoinether oder Phosphinoxide.

Es können auch beispielsweise die im Handel unter den Namen Irgacure® 184, Irgacure® 1800 und Irgacure® 500 der Firma Ciba Geigy, Genocure® MBF der Firma Rahn und Lucirin® TPO der Firma BASF AG erhältlichen Produkte eingesetzt werden.

Neben den Photoinitiatoren D können übliche Sensibilisatoren wie Anthracen in wirksamen Mengen mitverwendet werden.

Des Weiteren kann das Beschichtungsmittel einen oder mehrere Initiatoren E enthalten, die eine thermische Vernetzung durch Radikalbildung bewirken. Diese bilden vorzugsweise ab 80 bis 120°c Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. Als Verbindungen E sind C-C-spaltende Initiatoren sind besonders bevorzugt, da bei ihrer thermischen Spaltung keine gasförmigen zersetzungsprodukte gebildet werden, die zu Störungen in der Lackschicht führen könnten. Sofern Verbindungen E mit verwendet werden, liegen ihre Mengen im Allgemeinen im Bereich von 0,1 bis 10 Gew.-%, vorzugsweise 0,5 bis 8 Gew.-% und insbesondere 1 bis 5 Gew.-%, jeweils bezogen auf die Gesamtmenge des Beschichtungsmittels.

Beispiele geeigneter thermisch vernetzbarer Reaktivverdünner F sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind. Hierfür geeignete cyclische Monoolefine sind z. B. Cyclobuten, Cyclopenten, Cyclohexen, Cycloocten, Cyclohepten, Norbornen oder 7-Oxanorbornen. Hierfür geeignete acyclische Monoolefine sind z. B. in Kohlenwasserstoffgemischen enthalten, die in der Erdölverarbeitung durch Cracken erhalten werden (C₅-Schnitt).

Geeignete, oligomere Polyole F weisen vorzugsweise eine Hydroxylzahl (OHZ) von 200 bis 450, ein zahlenmittleres Molekulargewicht Mₙ im Bereich von 400 bis 1000 und ein massenmittleres Molekulargewicht M_{w} im Bereich von 600 bis 1100 auf.

weitere Beispiele geeigneter thermisch vernetzbarer Reaktivverdünner F sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bis-hydroxymethylbutandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in der WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner F sind Polycarbonatdiole, Polyesterpolyole, Poly(meth)acrylatdiole oder hydroxylgruppenhaltige Polyadditionsprodukte.

Beispiele geeigneter reaktiver Lösemittel, welche als Reaktivverdünner F verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylenglykol, z. B. Ethoxyethylpropionat, Isopropoxypropanol oder Methoxypropylacetat genannt.

Darüber hinaus kann das Beschichtungsmittel mindestens einen weiteren thermisch härtbaren Bestandteil F1 in untergeordneten Mengen enthalten. Im Rahmen der vorliegenden Erfindung sind unter "untergeordneten Mengen" Mengen zu verstehen, welche die Dual-Cure-Eigenschaften des Beschichtungsstoffs nicht nachteilig beeinflussen. Sofern sie mit verwendet werden, soll ihr Anteil an dem Beschichtungsstoff im Allgemeinen 40 Gew.-%, vorzugsweise 35 Gew.-% und insbesondere 30 Gew.-% nicht überschreiten.

Beispiele geeigneter Bestandteile F1 sind die von den thermisch härtbaren Beschichtungsstoffen her bekannten Bindemittel und Vernetzungsmittel.

Beispiele geeigneter Bindemittel F1 sind lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, Polylactone, Polycarbonate, Polyether, Epoxidharz-Amin-Addukte, (Meth)Acrylatdiole, partiell verseifte Polyvinylester oder Polyharnstoffe, von denen die Acrylatcopolymerisate, die Polyester, die Polyurethane, die Polyether und die Epoxidharz-Amin-Addukte vorteilhaft sind.

Geeignete Bindemittel F1 werden beispielsweise unter den Handelsnamen Desmophen® 650, 2089,1100, 670, 1200 oder 2017 von der Firma Bayer, unter den Handelsnamen Priplas oder Pripol® von der Firma Uniqema, unter den Handelsnamen Chempol® Polyester oder Polyacrylat-Polyol von der CCP, unter den Handelsnamen Crodapol® 0-85 oder 0-86 von der Firma Croda oder unter dem Handelsnamen Formrez® ER417 von der Firma Witco vertrieben.

Als Reaktivverdünner G, welche mit aktinischer Strahlung vernetzt werden können, werden beispielsweise (Meth)Acrylsäure und deren Ester, Maleinsäure und deren Ester bzw. Halbester, Vinylacetat, Vinylether, Vinylharnstoffe u. a. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerintri(meth)acrylat, Trimethylolpropantri(meth)acrylat, Trimethylolpropandi(meth)acrylat, Styrol, Vinyltoluol, Divinylbenzol, Pentaerythrittri(meth)acrylat, Pentaerythrittetra(meth)acrylat, Dipropylenglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, Isobornyl(meth)acrylat, Dimethylacrylamid und Dicyclopentylacrylat, die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im Allgemeinen 36 C-Atome aufweist. Geeignet sind auch Gemische der genannten Monomeren.

Bevorzugte Reaktivverdünner G sind Mono- und/oder Diacrylate, wie z. B. Isobornylacrylat, Hexandioldiacrylat, Tripropylenglykoldiacrylat, Laromer® 8887 der Firma BASF AG und Actilane® 423 der Firma Akcros Chemicals Ltd., GB. Besonders bevorzugte Reaktivverdünner G sind Isobornylacrylat, Hexandioldiacrylat und Tripropylenglykoldiacrylat.

Sofern sie mit verwendet werden, werden die Reaktivverdünner F und G in einer Menge von vorzugsweise 2 bis 70 Gew.-%, besonders bevorzugt 10 bis 65 Gew.-% und insbesondere 15 bis 50 Gew.-%, jeweils bezogen auf die Gesamtmenge des Beschichtungsmittels, angewandt.

Ein weiterer Bestandteil des Beschichtungsmittels können Nanopartikel H sein, insbesondere solche auf der Basis von Siliziumdioxid, Aluminiumoxid und Zirkoniumoxid. Sie weisen eine Teilchengröße < 50 nm auf und haben keinen Mattierungseffekt. Bevorzugt werden Nanopartikel auf der Basis von Aluminiumoxid und Zirkoniumoxid verwendet.

Beispiele geeigneter Nanopartikel H auf der Basis von Siliziumdioxid sind pyrogene Siliziumdioxide, welche unter dem Handelsnamen Aerosil® VP8200, VP721 oder R972 von der Firma Degussa oder den Handelsnamen Cab O Sil® TS 610, CT 1110F oder CT 1110G von der Firma CABOT vertrieben werden.

Im Allgemeinen werden diese Nanopartikel in der Form von Dispersionen in mit aktinischer Strahlung härtbaren Monomeren wie die vorstehend beschriebenen Reaktivverdünner G vertrieben. Beispiele geeigneter Monomere, welche für den vorliegenden Verwendungszweck besonders gut geeignet sind, sind alkoxyliertes Pentaerythrittetra- oder -triacrylat, Ditrimethylolpropantetra- oder -triacrylat, Dineopentylglykoldiacrylat, Trimethylolpropantriacrylat, Trishydroxyethylisocyanurattriacrylat, Dipentaerythritpenta- oder -hexaacrylat oder Hexandioldiacrylat. Im Allgemeinen enthalten diese Dispersionen die Nanopartikel in einer Menge von, jeweils bezogen auf die Dispersionen, 10 bis 80 Gew.-%, vorzugsweise 15 bis 70 Gew.-%, besonders bevorzugt 20 bis 60 Gew.-% und insbesondere 25 bis 50 Gew.-%.

Ein Beispiel für eine erfindungsgemäß besonders gut geeignete Dispersion von Nanopartikeln ist die Dispersion, welche unter dem Handelsnamen High Link® OG 103-31 von der Firma Clariant Hoechst vertrieben wird.

Die Dispersionen der Nanopartikel sind in dem Beschichtungsmittel vorteilhafterweise in einer Menge von 2 bis 30 Gew.-%, besonders bevorzugt 3 bis 25 Gew.-% und insbesondere 5 bis 20 Gew.-%, jeweils bezogen auf die Gesamtmenge des Beschichtungsmittels, enthalten.

Im Rahmen der vorliegenden Erfindung werden vorzugsweise Beschichtungsmittel eingesetzt, die eine Komponente I) enthalten, die geeignet ist, wenigstens eine der Härtungen so zu steuern, dass die Lackschicht einen Gradienten (eine Unstetigkeit) hinsichtlich wenigstens einer chemischen und/oder physikalischen Eigenschaft aufweist. Solche Funktionsadditive unterscheiden sich von den üblichen Lackadditiven K).

Erfindungsgemäß ist die Komponente I) ausgewählt unter UV-Absorbern, farbigen Pigmenten sowie Mischungen davon.

Erfindungsgemäß enthält das Beschichtungsmittel die Komponente I) in einer Menge von mindestens 5 Gew.-% und speziell mindestens 7 Gew.-%, bezogen auf die Gesamtmenge der Komponenten A) bis K).

Die Beeinflussung der Intensität von UV-Strahlung durch Streuung oder Absorption von Pigment- oder Farbstoffadditiven kann z. B. durch die Kubelka-Munk-Gleichung oder eine davon abgeleitete Strahlungsgleichung erfolgen. Die Anwendung der Kubelka-Munk-Gleichung wird z. B. von Z. W. Wicks Jr. und W. Kuhhirt in J. Paint Technol. 47, 1975, S. 49-59 beschrieben.

Darüber hinaus kann das Beschichtungsmittel mindestens ein übliches und bekanntes Lackadditiv K) enthalten. Dies liegt vorzugsweise in wirksamen Mengen, d. h. in Mengen vorzugsweise bis zu 20 Gew.-%, besonders bevorzugt bis zu 15 Gew.-% und insbesondere bis zu 10 Gew.-%, jeweils bezogen auf die Gesamtmenge des Beschichtungsmittels, vor.

Beispiele geeigneter Lackadditive K) sind :
i) Lichtschutzmittel wie HALS-Verbindungen, Benztriazole oder Oxalanilide;
ii) Radikalfänger;
iii) Katalysatoren für die Vernetzung wie Dibutylzinndilaurat oder Lithiumdecanoat;
iv) Slipadditive;
v) Polymerisationsinhibitoren;
vi) Entschäumer;
vii) Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfonsäuren von alkoxylierten Alkanolen und Polyolen, Phenolen und Alkylphenolen;
viii) Netzmittel wie Siloxane, fluorhaltige Verbindungen, Carbonsäurehalbester, Phosphorsäureester, Polyacrylsäuren und deren Copolymere oder Polyurethane;
ix) Haftvermittler wie Tricyclodecandimethanol;
x) Verlaufmittel;
xi) filmbildende Hilfsmittel wie Cellulose-Derivate;
xii) Flammschutzmittel oder Mattierungsmittel.

Weitere Beispiele geeigneter Lackadditive K) werden in dem Lehrbuch "Lackadditive" von Johan Bieleman, Wiley-VCH, Weinheim, New York, 1998, beschrieben.

Das in dem erfindungsgemäßen Verfahren eingesetzte Beschichtungsmittel kann in unterschiedlichen Formen vorliegen. So kann es bei entsprechender Wahl seiner vorstehend beschriebenen Bestandteile als flüssiges Beschichtungsmittel vorliegen, welches im Wesentlichen frei von organischen Lösemitteln und/oder Wasser ist. Indes kann es sich bei dem Beschichtungsmittel um eine Lösung oder Dispersion der vorstehend beschriebenen Bestandteile in Wasser und/oder organischen Lösemitteln handeln. Des Weiteren kann das Beschichtungsmittel bei entsprechender Wahl seiner vorstehend beschriebenen Bestandteile ein Pulverklarlack sein. Dieser Pulverklarlack kann gegebenenfalls in Wasser dispergiert werden, wodurch ein Pulverslurry-Klarlack resultiert.

Dabei kann das Beschichtungsmittel, wenn es die Kombination der Bestandteile hinsichtlich der Reaktivität der funktionellen Gruppen a, b und c zulässt, ein Einkomponentensystem sein. Besteht indes die Gefahr, dass die genannten Bestandteile vorzeitig thermisch vernetzen, empfiehlt es sich, das Beschichtungsmittel als Zwei- oder Mehrkomponentensystem auszulegen, bei dem zumindest der Bestandteil B getrennt von den übrigen Bestandteilen gelagert und erst kurz vor der Verwendung zu diesen hinzugegeben wird.

Die Klarlackschicht wird in einer Nassschichtdicke aufgetragen, die nach der Aushärtung in der fertigen erfindungsgemäßen Klarlackierung eine Trockenschichtdicke von 5 bis 200, vorzugsweise 10 bis 100, besonders bevorzugt 15 bis 75 und insbesondere 20 bis 50 µm resultiert.

Die Applikation des Beschichtungsmittels zum Zwecke der Herstellung der Klarlackschicht kann durch alle üblichen Applikationsmethoden, wie z. B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritztapplikation wie zum Beispiel Hot-Air-Heißspritzen. Die Applikationen kann bei Temperaturen von max. 70 bis 80 °C durchgeführt werden, so dass geeignete Applikationsviskositäten erreicht werden, ohne dass bei der kurzzeitig einwirkenden thermischen Belastung eine Veränderung oder Schädigungen des Beschichtungsmittels und seines gegebenenfalls wiederaufzubereitenden Overspray eintreten. So kann das Heißspritzen so ausgestaltet sein, dass das Beschichtungsmittel nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsmittel selbst, betrieben wird. Bevorzugt wird die Applikation bei Beleuchtung mit sichtbarem Licht einer Wellenlänge von über 550 nm oder unter Lichtausschluss durchgeführt. Hierdurch werden eine stoffliche Änderung oder Schädigung des Beschichtungsmittels und des Overspray vermieden.

Selbstverständlich können die vorstehend beschriebenen Applikationsmethoden auch bei der Herstellung weiterer Lackschichten oder der Basislackschicht im Rahmen der Herstellung eines Mehrschichtaufbaus angewandt werden. Hierbei können jeweils unterschiedliche Beschichtungsstoffe für den Aufbau der verschiedenen Schichten angewandt werden. Bevorzugt ist die Applikation auf einer Basislackschicht.

Die erfindungsgemäße Lackierung eignet sich hervorragend für die Lackierung eines grundierten oder ungrundierten Substrats.

Als Substrate kommen alle zu lackierenden Oberflächen, die einer kombinierten Härtung zugänglich sind in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel. Demnach ist die erfindungsgemäße Klarlackierung auch für Anwendungen außerhalb der Automobillackierung geeignet, insbesondere für die Lackierung von Möbeln und die industrielle Lakkierung, inklusive Coil Coating und Container Coating.

Vorzugsweise umfassen die erfindungsgemäß eingesetzten Substrate wenigstens ein natürliches oder synthetisches polymeres Material.

Beispiele für derartige Materialien sind:
1. Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen, wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
2. Polyolefine, d. h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere radikalisch oder mittels Katalysator, wobei der Katalysator gewöhnlich ein oder mehrere Metalle der Gruppe IVb, Vb, VIb oder VIII enthält. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
3. Mischungen der unter 1. genannten Polymeren, z. B. Mischungen von Polypropylen mit Polyisobutylen, Polypropylen mit Polyethylen (z. B. PP/HDPE, PP/LDPE) und Mischungen verschiedener Polyethylentypen (z. B. LDPE/HDPE).
4. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexandien, Dicyclopentadien oder Ethylidennorbornen; ferner Mischungen solcher Copolymere untereinander und mit unter 1. genannten Polymeren, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren, wie z. B. Polyamiden.
5. Kohlenwasserstoffharze, inklusive hydrierte Modifikationen davon (z. B. Klebrigmacherharze) und Mischungen von Polyalkylenen und Stärke.
6. Polystyrol, Poly-(p-methylstyrol), Poly-(α-methylstyrol).
7. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.
8. Pfropfcopolymere von Styrol oder α-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6. genannten Copolymeren, wie sie z. B. als sogenannte ABS-, MBS-, ASA- oder AES-Polymere bekannt sind.
9. Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
10. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
11. Copolymere der unter 10. genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
12. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
13. Homo- und Copolymere von cyclischen Ethern, wie Polyalkylenglykole, Polyethylenoxyd, Polypropylenoxyd, oder deren Copolymere mit Bisglycidylethern.
14. Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.
15. Polyphenylenoxide und -sulfide und deren Mischungen mit Styrolpolymeren oder Polyamiden.
16. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
17. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide z. B. ausgehend von p-Phenylendiamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylen-isophthalamid. Geeignet sind auch Block-Copolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Geeignet sind ferner mit EPDM oder ABS modifizierte Polyamide oder Copolyamide; sowie während der Verarbeitung kondensierte Polyamide ("RIM-Polyamidsysteme").
18. Polyharnstoffe, Polyimide, Polyamidimide, Polyetherimide, Polyesterimide, Polyhydantoine und Polybenzimidazole.
19. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.
20. Polycarbonate und Polyestercarbonate.
21. Polysulfone, Polyethersulfone und Polyetherketone.
22. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
23. Trocknende und nicht-trocknende Alkydharze.
24. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
25. Vernetzbare Acrylharze, die sich von substituierten Acrylsäureestern ableiten, wie z. B. von Epoxyacrylaten, Urethanacrylaten oder Polyesteracrylaten.
26. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
27. Vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern, wie z. B. Anhydriden oder Aminen mit oder ohne Beschleunigern vernetzt werden.
28. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
29. Geeignet sind ganz allgemein binäre und polynäre Mischungen (Polyblends) der vorgenannten Polymeren, wie z. B. PP/EPDM, Polyamid/EPDM oder ABS, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Die erfindungsgemäß eingesetzten Beschichtungsmittel eignen sich vorteilhaft für industrielle Lackierungen praktisch aller Teile des privaten oder industriellen Gebrauchs; wie Radiatoren, Haushaltsgeräte, Kleinteile aus Metall, Radkappen oder Felgen. Insbesondere eignet sich das erfindungsgemäße Verfahren zur Herstellung von beschichteten Substraten mit Lackierungen als Überzug von Basislacken, vorzugsweise in der Automobilindustrie. Besonders geeignet sind Lackierungen über Wasserbasislacken auf Basis von Polyestern, Polyurethanharzen und Aminoplastharzen, insbesondere im Rahmen einer Mehrschichtlackierung.

Das erfindungsgemäße Beschichtungsmittel mit Eigenschaftsgradient eignet sich vorzugsweise für die Lackierung oder als Komponente einer Mehrschichtlackierung. Bei diesen Lackierungen und Mehrschichtlackierungen werden vorzugsweise grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) als Substrate eingesetzt. Die zu lackierenden Kunststoffe können selbstverständlich auch Polymerblends, modifizierte Kunststoffe oder faserverstärkte Kunststoffe sein. Das erfindungsgemäße Beschichtungsmittel mit Eigenschaftsgradient kann auch für die Beschichtung von üblicherweise im Fahrzeugbau, insbesondere Kraftfahrzeugbau, eingesetzten Kunststoffen zum Einsatz kommen.

Im Falle von nicht funktionalisierten und/oder unpolaren Substratoberflächen können diese vor der Beschichtung in bekannter Weise einer Vorbehandlung, wie mit einem Plasma oder mit Beflammen, unterzogen werden.

Mit der Härtung des applizierten Beschichtungsmittels wird man vorzugsweise nach einer gewissen Ruhezeit beginnen. Die Ruhezeit kann eine Dauer von 30 s bis 2 h, vorzugsweise 1 min bis 1 h und insbesondere 1 min bis 30 min haben. Die Ruhezeit dient dem Verlauf und der Entgasung der Klarlackschicht und/oder dem Verdunsten von flüchtigen Bestandteilen wie Lösemittel, Wasser oder Kohlendioxid, wenn das Beschichtungsmittel mit überkritischem Kohlendioxid als Lösemittel appliziert worden ist. Die Ruhezeit kann durch die Anwendung erhöhter Temperaturen bis 80°c unterstützt und/oder verkürzt werden, sofern hierbei keine Veränderung (z. B. Härtung) der Klarlackschicht eintritt. Die Ruhezeit kann aber auch ein Teil der ersten Härtung sein oder direkt in den Prozess der ersten Aushärtung übergehen. Hierbei ist zu unterscheiden zwischen einer Verfilmung des aufgetragenen Beschichtungsmittels und dessen Härtung. Im Rahmen der vorliegenden Erfindung wird der Begriff "Verfilmung" von "Härtung" dadurch unterschieden, dass bei letzterem kovalente Bindungen zwischen den an der Härtung beteiligten Komponenten geknüpft werden.

Zur Erreichung des gewünschten Gradienten einer chemischen und/oder physikalischen Eigenschaft führt man die Härtung vorzugsweise unter Anwendung von zwei unterschiedlichen Härtungsmechanismen durch. Eine der beiden Härtungsmethoden wird dabei vorzugsweise so gesteuert, dass sie bevorzugt an der Oberfläche wirkt und dem Lack die dort notwendige Oberflächenbeständigkeit gegenüber mechanischen und Umwelteinflüssen gibt. Innerhalb der Lackschicht nimmt die Wirksamkeit einer Härtung ab, so dass das gebildete Netzwerk eine Unstetigkeit hinsichtlich chemischer und/oder physikalischen Eigenschaften zeigt.

Mögliche Härtungsmethoden sind die Trocknung bzw. das Eindampfen von Lösungen und Dispersionen, die thermische Härtung, die oxidative Härtung oder die Härtung durch energiereiche Strahlung, insbesondere UV-Strahlung. Die zweite Härtung kann durch eine der beschriebenen Härtungsmethoden, z. B. durch Variation der Einwirkungszeit oder durch höhere Temperaturen oder durch höhere Strahlungssintensitäten bzw. anderen Wellenlängenbereichen der Strahlung erfolgen, bevorzugt wird das Eindampfen bzw. Trocknen von Lösungen oder Dispersionen, besonders bevorzugt die thermische Härtung.

Die thermische Härtung weist keine methodischen Besonderheiten auf sondern erfolgt nach den üblichen und bekannten Methoden wie Erhitzen in einem Umluftofen oder Bestrahlen mit IR-Lampen. Vorteilhafterweise erfolgt die thermische Härtung bei einer Temperatur von 50 bis 100 °C, besonders bevorzugt 80 bis 100 °C und insbesondere 90 bis 100 °C während einer Zeit von 1 Sekunde bis zu 2 h, besonders bevorzugt 5 Sekunden bis zu 1 h und insbesondere 10 Sekunden bis 30 min.

Werden Substrate verwendet, welche thermisch stärker belastbar sind, kann die thermische Vernetzung auch bei Temperaturen oberhalb 100°C durchgeführt werden. Im Allgemeinen empfiehlt es sich, hierbei Temperaturen von 180°C, vorzugsweise 160°C und insbesondere 140°c nicht zu überschreiten.

Das Ausmaß der ersten Aushärtung kann durch Variation der Zusammensetzung des Beschichtungsmittels oder durch Wahl der Härtungsbedingungen breit variieren werden und richtet sich nach den Erfordernissen des jeweiligen Einzelfalls. Es kann vom Fachmann aufgrund seines allgemeinen Fachwissens und/oder anhand einfacher Vorversuche ermittelt werden.

Erfindungsgemäß kann die zweite Härtung als oxidative oder thermische Härtung oder als Härtung mittels energiereicher Strahlung erfolgen. Die zweite Härtung kann sich von der ersten Härtungsmethode z. B. durch Variation der Einwirkungszeit oder durch höheren Temperaturen oder höhere Strahlungsintensitäten bzw. anderen Wellenlängenbereichen der Strahlung unterscheiden. Bevorzugt wird die zweite Härtung durch Einwirkung von energiereicher Strahlung wie insbesondere UV-Strahlung bewirkt.

Im Falle von Härtung mit energiereicher Strahlung wird vorzugsweise in einer Atmosphäre mit reduziertem Sauerstoffgehalt gearbeitet. Ein reduzierter Sauerstoffgehalt kann beispielsweise durch Zuführen von Inertgasen, insbesondere von Kohlendioxid und/oder Stickstoff an die der Strahlung ausgesetzten Oberflächenbereiche der Klarlackschicht gewährleistet werden.

Für die Härtung mit energiereicher Strahlung werden die üblichen und bekannten Strahlenquellen und optischen Hilfsmaßnahmen angewandt. Beispiele geeigneter Strahlenquellen für die UV-Härtung sind Quecksilberhoch- oder -niederdruckdampflampen, welche gegebenenfalls mit Blei dotiert sind, um ein Strahlenfenster bis zu 405 nm zu öffnen.

Deren Anordnung ist im Prinzip bekannt und kann den Gegebenheiten des Werkstücks und der Verfahrensparameter angepasst werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlen verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U. V. and E. B. Curing Formulations for Printing Inks, Coatings and Paints, SITA Technology, Academic Press, London, United Kingdom 1984, beschrieben.

Erfolgt die erste und zweite Härtung durch aktinische Strahlung, so erfolgen die Aushärtungen stufenweise, d. h. durch mehrfache Belichtung oder Bestrahlung mit energiereicher Strahlung unterschiedlicher Leistung oder mit Strahlung verschiedenen Wellenlänge.

Erfolgt die erste und die zweite Härtung thermisch, so führt man die Aushärtungen stufenweise durch, d. h. durch Vorhärtung bzw. Aufschmelzen z. B. mit Hilfe von NIR-Strahlung bei niedriger Leistung und/oder für kurze Zeit und anschließende zweite Härtung bei höheren Temperaturen und/oder für längere Zeit. Der Temperaturanstieg im zu härtenden Beschichtungsmittel pro Zeiteinheit kann kontinuierlich oder stufenweise erfolgen, wobei vorzugsweise die zwei Härtungen nach unterschiedlichen physikalischen und/oder chemischen Mechanismen erfolgen, z. B. durch Trocknen und thermische Vernetzung, so dass einer der Mechanismen bei niedriger Leistung nicht oder nur extrem langsam erfolgt.

Bei zwei verschiedenen Härtungen des Lackfilms können diese gleichzeitig oder mit zeitlicher Verzögerung angewandt werden. Werden verschiedene Härtungsmethoden angewendet, kann die Reihenfolge variiert werden. Auch kann nach der ersten Härtung eine Wartezeit bis zum Beginn der zweite Härtung eingehalten werden. Die zweite Härtung kann dabei prinzipiell auch erst bis zum oder noch im Laufe des Gebrauchs des lackierten Gegenstands erfolgen.

Der Fachmann kann die Härtungsmethoden und Reihenfolge der Härtung, welche für den jeweiligen Einzelfall am vorteilhaftesten ist, aufgrund seines allgemeinen Fachwissens gegebenenfalls unter Zuhilfenahme einfacher Vorversuche ermitteln.

Eine der beiden Härtungen wird so gewählt, dass sie durch durch Zusatz von Additiven zum Beschichtungsmittel und/oder Wahl der Härtungsbedingungen sich eine Unstetigkeit hinsichtlich der chemischen und/oder physikalischen Eigenschaften innerhalb der Lackschicht senkrecht zur Oberfläche ergibt.

Im bevorzugten Fall wird diese Unstetigkeit hinsichtlich der chemischen und/oder physikalischen Eigenschaften bei einer Härtung mit aktinischer Strahlung erhalten. Besonders bevorzugt wird, dass durch Zusatz geeignete UV-Absorber und/oder farbige oder farblose Pigmente zum Beschichtungsmittel, die für die Aktivierung des Photoinitiators notwendige Energie innerhalb des Lackfilms abfällt. Der Lichtabfall im Wellenlängenbereich des Photoinitiators kann dabei durch Absorption und/oder Streuung erfolgen. Der Intensitätsabfall kann z. B. mit der Strahlengleichung von Kubelka-Munk abgeschätzt werden; siehe Z. W. Wicks, W. Kuhhirt, J. Paint. Technol. 1975, 47, S. 49-58.

Erfolgt die Induktion des Gradienten ausschließlich durch Einsatz wenigstens eines UV-Absorbers so wird dieser dem Beschichtungsmittel in einer Menge zugesetzt, die über dem üblichen Maße liegt, mit dem UV-Absorber derartigen Beschichtungsmitteln zugesetzt werden, z. B. mindestens 1 Gew.-%, bevorzugt mindestens 2 Gew.-%, besonders bevorzugt mindestens 3 Gew.-%, insbesondere mindestens 5 Gew.-%, speziell mindestens 7 Gew.-%, bezogen auf das Gesamtgewicht des Beschichtungsmittels. Bevorzugte UV-Absorber sind z. B. die im Handel unter den folgenden Namen erhältlichen Produkte:
- Tinuvin® 384 der Firma Ciba Geigy, Lichtschutzmittel auf Basis Iso-octyl-3-(3-(2H-benzotriazol-2-yl)-5-tert.-butyl-4-hydroxyphenylpropionat,
- Tinuvin® 1130 der Firma Ciba Geigy, Lichtschutzmittel auf Basis des Reaktionsproduktes aus Polyethylenglykol 300 und Methyl-3-[3-(2H-benzotriazol-2-yl)-5-tert.-butyl-4-hydroxyphenyl]propionat,
   CYAGARD® UV-1164L der Firma Dyno Cytec, Lichtschutzmittel auf Basis 2,4-Bis(2,4-dimethylphenyl)-6-(2-hydroxy-4-isooctyloxyphenyl)-1,3,5-triazin, 65 %ig in Xylol,
- Tinuvin® 400 der Firma Ciba Geigy, Lichtschutzmittel auf Basis einer Mischung aus 2-[4-((2-Hydroxy-3-dodecyloxypropyl)oxy)-2-hydroxyphenyl]-4,6-bis(2,4-dimethylphenyl)-1,3,5-triazin und 2-[4-((2-Hydroxy-3-decyloxypropyl)oxy)-2-hydroxyphenyl]-4,6-bis(2,4-dimethylphenyl)-1,3,5-triazin, 85 %ig in 1-Methoxy-2-propanol,
- CGL 1545 der Firma Ciba Geigy, Lichtschutzmittel auf Basis 2-[4-((2-Hydroxy-3-octyloxypropyl)oxy)-2-hydroxyphenyl]-4,6-bis(2,4-dimethylphenyl)-1,3,5-triazin,
- CYAGARD® UV-3801 der Firma Dyno Cytec, immobilisierbares Lichtschutzmittel auf Basis Triazin,
- CYAGARD® UV-3925 der Firma Dyno Cytec, immobilisierbares Lichtschutzmittel auf Basis Triazin.

Die Menge des UV-Absorbers bzw. der UV-Absorbermischung bzw. der Mischung mit farbigen und farblosen Pigmenten hängt von der Effektivität der jeweiligen Mischung und der Trockenschichtdicke des Lacks ab. Sie kann anhand der Kubelka-Munk-Gleichung sowie anderer Strahlengleichungen abgeschätzt werden oder aber vom Fachmann aufgrund seines allgemeinen Fachwissens gegebenenfalls unter Zuhilfenahme einfacher Vorversuche ermittelt werden.

Da Streuung und Absorption die Härtung durch aktinische Strahlung in den oberflächennahen Bereichen der Beschichtung nicht bzw. nur wenig beeinflussen, wird die Beständigkeit der Oberfläche gegenüber mechanischen und chemischen Einflüssen nicht bzw. nur wenig beeinflusst.

Im Rahmen dieser Erfindung muss die Härtung in tieferen Schichten der Beschichtung nahe am Substrat nicht vollständig unterbunden werden. Es reicht vielmehr aus, die Härtung so zu steuern, dass die Haftung verbessert wird. Auf den besonders bevorzugten Kunststoffsubstraten wird durch das beschriebene Verfahren neben der Haftung auch verhindert, dass die harten und spröden Eigenschaf-ten an der Lackoberfläche die mechanischen Eigenschaften des Kunststoffs beeinflussen.

Bevorzugt beträgt die Dicke der nach dem erfindungsgemäßen Verfahren erhaltenen Lackschicht mindestens 10 µm, bevorzugt wenigstens 20 µm.

Ein weiterer Gegenstand der Erfindung ist ein beschichtetes Substrat, das nach einem der zuvor beschriebenen Verfahren erhältlich ist.

Ein weiterer Gegenstand der Erfindung ist ein Beschichtungsmittel, wie zuvor definiert, das die Komponente I) in einer Menge von mindestens 5 Gew.-% und speziell mindestens 7 Gew.-%, enthält.

Die Erfindung wird anhand der folgenden, nicht einschränkenden Beispiele näher erläutert.

### Beispiele

Im Folgenden bedeuten alle Teile Gewichtsteile, sofern nicht ausdrücklich etwas anderes angegeben wird.

Aus den in den Ausführungsbeispielen angegebenen Komponenten wurden, sofern nicht ausdrücklich etwas anderes angegeben wird, unter intensivem Rühren mittels eines Disolvers oder eines Rührers, die Beschichtungsmittel hergestellt.

Mit dem in den Ausführungsbeispielen beschriebenen Beschichtungsmittel, wurden mit einem Kastenrakel, Spaltgröße 200 µm, Filme auf gereinigten, schwarz eingefärbten Glasplatten hergestellt.
Die Aushärtung der Filme erfolgt an einer IST-Beschichtungsanlage mit 2 UV-Strahlern und einer Förderband-Laufgeschwindigkeit von 10 m/min. Die Strahlendosis beträgt ca. 1800 mJ/cm2.

Die Bestimmung der mechanischen Beständigkeit der, unter verschiedenen Sauerstoffgehalten gehärteten Beschichtungen, erfolgte durch Pendelhärte nach König, DIN 53157, ISO 1522 und durch Kratzfestigkeit mit dem Scotch-Brite-Test nach Lagerung für 24 h im Klimaraum. Die Messung der Elastizität bzw. Verformung der Filme wurde auf Normblechen nach DIN 53156, ISO 1520 (Erichsen Tiefung) durchgeführt jeweils nach Lagerung der Filme für 24 h im Klimaraum.

Im Scotch-Brite-Test wird als Prüfkörper ein 3 x 3 cm großer Siliciumcarbid-modifizierter Faservlies (Scotch Brite SUFN, 3M Deutschland, 41453 Neuss) an einem Zylinder befestigt. Dieser Zylinder drückt das Faservlies mit 750 g an die Beschichtung und wird pneumatisch über die Beschichtung bewegt. Die Wegstrecke der Auslenkung beträgt 7 cm. Nach 10 bzw. 50 Doppelhüben (DH) wird im mittleren Bereich der Beanspruchung der Glanz (Sechsfachbestimmung) analog DIN 67530, ISO 2813 bei einem Einfallwinkel von 60° gemessen. Aus den Glanzwerten der Beschichtungen vor und nach der mechanischen Beanspruchung wird die Differenz gebildet. Der Glanzverlust, die Delta-Glanzwerte sind indirekt proportional zur Kratzfestigkeit.

Zur Charakterisierung der mechanischen Eigenschaften von lackierten und unlackierten Kunststoffsubstraten Durchstoßversuche (ISO 6603-2: 2000) durchgeführt. Die Prüfungen erfolgten im Normklima bei (23±2) °C und (50±10) % rel. Feuchte an jeweils 10 Probekörpern.

Bei den Probekörpern handelt es sich, wenn nicht anders angegeben, um Normprüfkörper, die aus den angegebenen Kunststoffen hergestellt wurden. Die Probenkörper wurden vor der Lackierung mit Isopropanol:Wasser 4:1 abgewischt und anschließend ohne weitere Vorbehandlung beschichtet.

| Beschichtungsmittel 1: schwarz pigmentiertes Dual-Cure-System | | |
|---|---|---|
| Komponente | Teile | Bemerkung |
| Isocyanatoacrylat (Produkt 6 der Beispiele der WO 00/44799) | 73,9 | Komponente 1: Viskosität ca. 2 Pas |
| Flammruß 102 (Rußpigment der Fa. Degussa) | 13,0 | |
| Dispergieradditiv (Disperbyk® 163 der Fa. Byk) | 13,0 | |
| Butylacetat | 3,0 | |
| Trimethylolpropan/Propandiol (Gewichtsverhältnis 2:1) | 9 | Komponente 2: Zugabe zur Komponent 1 (Stammlack) direkt vor der Applikation und Härtung |
| Fotoinitiatormischung (Irgacure® 184, Fa. Ciba Spezialitätenchemie) | 4,4 | |
| Verlaufsadditiv (Byk® 307 der Fa. Byk) | 0,5 | |

Härtungsbedingungen: 20 min 80°C und 4-mal UV-Belichtung bei 10 m/min und 80 W/cm

Zu Vergleichszwecken wurde ein unmodifiziertes Beschichtungsmittel 2 hergestellt, das sich vom erfindungsgemäßen Beschichtungsmittel 1 lediglich durch das Fehlen des Flammrußes unterscheidet. Das Fehlen des Flammrußes bewirkt, dass bei der Härtung kein Gradient im chemischen Aufbau der Lackschicht induziert wird.

Beide Beschichtungsmittel ergeben Lacke, bei denen eine Kratzbelastung mit Fingernagel oder Holzspatel keine sichtbare Beschädigung hinterlässt. Die Chemikalienbeständigkeit beider Lacke erfüllt die Vorgaben der Möbelindustrie nach DIN 68861, Teil 1, Abschnitt 1B.

Die Ergebnisse der Durchstoßprüfung sind in nachfolgender Tabelle gegenübergestellt.

**Tabelle: Mittelwerte und Standardabweichungen der Prüfergebnisse**

| Substrat | Prüfung | Eigenschaft | Kunststoff ohne Lack | Beschichtungsmittel 1 | Beschichtungsmittel 2 |
|---|---|---|---|---|---|
| Ultradur® | Durchstoß- | FM/N | 3479 ± 5 | 3514 ± 12 | 802 ± 117 |
| KR 4080/1 | versuch | WM/J | 25,9 ± 0,8 | 25,8 ± 0,6 | 3,8 ± 1,7 |
| der Fa. BASF AG | | WP/J | 42,0 ± 1,5 | 40,0 ± 5,2 | 7,0 ± 3,2 |

Erläuterung:
FM: Maximalkraft
WM: Arbeit bis Maximalkraft
WP: Schädigungsarbeit (bei Kraftabfall auf 0,5 FM)
Ultradur®KR 4080/1: PC/PBT/MBS-Blend

Im Durchstoßversuch ist der Einfluss des Gradienten auf die erhaltene Lackierung deutlich zu beobachten. Hier reagiert neben der Durchstoßarbeit auch die Maximalkraft und somit auch die Arbeit bei Maximalkraft, allerdings wiederum nur für den durchgehärteten Lack. Der nicht durchgehärtete Lack hat keinen versprödenden Einfluss, die Proben verhalten sich wie das unlackierte Substrat.

| Beschichtungsmittel 3: mit UV-Absorber modifizierter Dual-Cure-Lack | | |
|---|---|---|
| Komponente | Teile | Bemerkung |
| Isocyanatoacrylat (Produkt 6 der Beispiele der WO 00/44799) | 73,9 | Komponente 1: Viskosität ca. 2 Pas |
| Uvinul® (Benzophenon-UV-Absorber der Fa. BASF AG) | 10,0 | |
| Dispergieradditiv (Disperbyk® 163 der Fa. Byk) | 13,0 | |
| Butylacetat | 3,0 | |
| Trimethylolpropan/Propandiol (Gewichtsverhältnis 2:1) | 9 | Komponente 2: Zugabe zur Komponent 1 (Stammlack) direkt vor der Applikation und Härtung |
| Fotoinitiatormischung (Irgacure0 184, Fa. Ciba Spezialitätenchemie) | 4,4 | |
| Verlaufsadditiv (Byk® 307 der Fa. Byk) | 0,5 | |

Härtungsbedingungen: 20 min 80°C und 4-mal UV-Belichtung bei 10 m/min und 80 W/cm

Zu Vergleichszwecken wurde ein unmodifiziertes Beschichtungsmittel 4 hergestellt, das sich vom erfindungsgemäßen Beschichtungsmittel 3 lediglich durch das Fehlen des UV-Absorbers unterscheidet. Das Fehlen des UV-Absorbers bewirkt, dass bei der Härtung kein Gradient im chemischen Aufbau der Lackschicht induziert wird.

**Tabelle: Lackeigenschaften für Beschichtungsmittel 3 und 4**

| Prüfung | Beschichtungsmittel 3 | Beschichtungsmittel 4 |
|---|---|---|
| Erichsen Tiefung | 5,5 | 4,5 |
| Pendelhärte | 183 | 193 |
| Kratzfestigkeit | 89 | 88 |

Vergleich der mechanischen Eigenschaften von unlackierten Kunststoffsubstraten sowie mit Beschichtungsmittel 3 (erfindungsgemäß) und 4 (Vergleich) lackierten Probenkörpern.

Die Ergebnisse der Durchstoßprüfung sind in nachfolgender Tabelle gegenübergestellt.

**Tabelle: Mittelwerte und Standardabweichungen der Prüfergebnisse**

| Substrat | Prüfung | Messtemperatur | Kunststoff ohne Lack | Beschichtungsmittel 3 | Beschichtungsmittel 4 |
|---|---|---|---|---|---|
| Stapron® | Durch- | 23°C | 69 | 27 Nm | 29 Nm |
| der BASF AG | stoßversuch | 0 °C | 70 | 24 Nm | 12 Nm |
| Luran® SC | Durch- | 23°C | 78 | 51 Nm | 44 Nm |
| der BASF AG | stoßversuch | 0°C | 76 | 45 Nm | 21 Nm |

| | | | | | |
|---|---|---|---|---|---|
| Stapron®: ABS/PA6-Blend Luran®SC: PC/ASA-Blend | | | | | |

## Patentansprüche

1. Verfahren zur Herstellung eines beschichteten Substrats durch Auftragen wenigstens eines Beschichtungsmittels auf das Substrat und anschließendes Härten zur Erzielung einer Lackschicht auf dem Substrat, wobei man in dem Beschichtungsmittel im Wesentlichen senkrecht zur Substratoberfläche einen Gradienten wenigstens einer chemischen und/oder physikalischen Eigenschaft induziert und fixiert, und wobei das Beschichtungsmittel
A) wenigstens eine Verbindung mit mindestens zwei funktionellen Gruppen, die zur Reaktion mit einer komplementären funktionellen Gruppe einer Verbindung der Komponente B) unter Bedingungen der thermischen Härtung befähigt sind,
B) wenigstens eine Verbindung mit mindestens zwei funktionellen Gruppen, die zur Reaktion mit einer komplementären funktionellen Gruppe einer Verbindung der Komponente A) unter Bedingungen der thermischen Härtung befähigt sind,
C) gegebenenfalls wenigstens eine Verbindung mit zwei in Gegenwart eines Photoinitiators mit UV-Strahlung härtbaren C=C-Doppelbindungen,
D) wenigstens einen Photoinitiator,
E) gegebenenfalls wenigstens eine Verbindung, die befähigt ist, thermisch Radikale zu bilden,
F) gegebenenfalls wenigstens einen von den Verbindungen der Komponenten A) bis C) verschiedenen Reaktiwerdünner, der zur Vernetzung unter Bedingungen der thermischen Härtung befähigt ist,
G) gegebenenfalls wenigstens einen von den Verbindungen der Komponenten A) bis C) und F) verschiedenen Reaktivverdünner, der zur Vernetzung mit UV-Strahlung befähigt ist,
H) gegebenenfalls Nanopartikel,
I) mindestens 5 Gew.-%, bezogen auf die Gesamtmenge der Komponenten A) bis K),wenigstens eines Lackadditivs, ausgewählt unter UV-Absorbern und farbigen Pigmenten, und Mischungen davon, das zur Induktion des Gradienten während des Härtens befähigt ist, und
K) gegebenenfalls weitere von Verbindungen der Komponente I) verschiedene, übliche Lackadditive,
umfasst, mit der Maßgabe, dass wenigstens eine Verbindung der Komponenten A) und/oder B) zusätzlich wenigstens eine mit uv-Strahlung härtbare C=C-Doppelbindung aufweist und wobei als komplementäre funktionelle Gruppen Hydroxylgruppen und Isocyanatgruppen eingesetzt werden.

2. Verfahren nach Anspruch 1, **dadurch gekennzeichnet, dass** die den Gradienten aufweisende Eigenschaft ausgewählt ist unter der Vernetzungsdichte, Netzbogenlänge, Netzspannung, Mikrohärte, dem freien Volumen und Kombinationen davon.

3. Verfahren nach einem der vorhergehenden Ansprüche, wobei die Dicke der Lackschicht mindestens 10 µm, bevorzugt wenigstens 20 µm, beträgt.

4. Beschichtetes Substrat, erhältlich durch ein Verfahren nach einem der Ansprüche 1 bis 3.

5. Beschichtungsmittel wie in Anspruch 1 definiert.

## Claims

1. A process for producing a coated substrate by applying at least one coating composition to the substrate and then curing to obtain a coating film on the substrate, wherein a gradient in at least one chemical and/or physical property is induced and fixed in the coating composition, substantially perpendicularly to the substrate surface, and wherein the coating composition comprises
A) at least one compound containing at least two functional groups which are capable of reaction with a complementary functional group of a compound of component B) under conditions of thermal cure,
B) at least one compound containing at least two functional groups which are capable of reacting with a complementary functional group of a compound of component A) under conditions of thermal cure,
C) if appropriate, at least one compound having two C=C double bonds curable with UV radiation in the presence of a photoinitiator,
D) at least one photoinitiator,
E) if appropriate, at least one compound capable of forming free radicals thermally,
F) if appropriate, at least one reactive diluent, other than the compounds of components A) to C) which is capable of crosslinking under conditions of thermal cure,
G) if appropriate, at least one reactive diluent, other than the compounds of components A) to C) and F), which is capable of crosslinking with UV radiation,
H) if appropriate, nanoparticles,
I) at least 5% by weight, based on the overall amount of components A) to K), of at least one coating additive selected from UV absorbers and colored pigments, and mixtures thereof, which is capable of inducing the gradient during cure, and
K) if appropriate, further customary coating additives other than compounds of component I),
with the proviso that at least one compound of components A) and/or B) additionally contains at least one UV-curable C=C double bond and wherein hydroxyl groups and isocyanate groups are used as complementary functional groups

2. The process as claimed in claim 1, wherein the property exhibiting the gradient is selected from the crosslinking density, network arc length, network tension, microhardness, free volume, and combinations thereof.

3. The process as claimed in either of the preceding claims, wherein the thickness of the coating film is at least 10 µm, preferably at least 20 µm.

4. A coated substrate obtainable by a process as claimed in any of claims 1 to 3.

5. A coating composition as defined in claim 1.

## Revendications

1. Procédé de fabrication d'un substrat enduit grâce à l'application d'au moins un agent d'enduction sur le substrat et au durcissement consécutif en vue de l'obtention d'une couche de peinture sur le substrat, un gradient d'au moins une propriété chimique et/ou physique étant induit et localisé dans l'agent d'enduction de manière essentiellement perpendiculaire à la surface du substrat, et l'agent d'enduction comprenant:
A) au moins un composé ayant au moins deux groupes fonctionnels qui sont aptes à réagir avec un groupe fonctionnel complémentaire d'un composé du composant B) dans les conditions du durcissement thermique,
B) au moins un composé ayant au moins deux groupes fonctionnels qui sont aptes à réagir avec un groupe fonctionnel complémentaire d'un composé du composant A) dans les conditions du durcissement thermique,
C) éventuellement au moins un composé ayant deux liaisons doubles C=C pouvant être durcies par un rayonnement UV en présence d'un photoamorceur,
D) au moins un photoamorceur,
E) éventuellement au moins un composé qui est apte à former des radicaux de manière thermique,
F) éventuellement au moins un diluant réactif différent des composés des composants A) à C), qui est apte à réticuler dans les conditions du durcissement thermique,
G) éventuellement au moins un diluant réactif différent des composés des composants A) à C) et F), qui est apte à réticuler avec un rayonnement UV,
H) éventuellement des nanoparticules,
I) au moins 5 % en poids, par rapport à la quantité totale des composants A) à K), d'au moins un additif de peinture, sélectionné parmi des absorbeurs de rayons UV et des pigments colorés, et des mélanges de ceux-ci, qui est apte à induire le gradient pendant le durcissement, et
K) éventuellement d'autres additifs de peinture usuels, différents des composés du composant I),
sous réserve qu'au moins un composé des composants A) et/ou B) présente de manière supplémentaire au moins une liaison double C=C pouvant être durcie avec un rayonnement UV, et des groupes hydroxyle et des groupes isocyanate étant utilisés en tant que groupes fonctionnels complémentaires.

2. Procédé selon la revendication 1, **caractérisé en ce que** la propriété présentant le gradient est sélectionnée parmi la densité de réticulation, la longueur d'arc de réseau, la tension de réseau, la microdureté, le volume libre et leurs combinaisons.

3. Procédé selon l'une quelconque des revendications précédentes, dans lequel l'épaisseur de la couche de peinture est d'au moins 10 µm, de manière préférée d'au moins 20 µm.

4. Substrat enduit, que l'on peut obtenir grâce à un procédé selon l'une quelconque des revendications 1 à 3.

5. Agent d'enduction tel que défini dans la revendication 1.
